# EUROPÄISCHE PATENTSCHRIFT

(11) **EP 1 716 795 B1**
(45) Veröffentlichungstag und Bekanntmachung des Hinweises auf die Patenterteilung: **09.05.2007**
(21) Anmeldenummer: 05290910.8
(22) Anmeldetag: 25.04.2005
(51) Int. Cl.: A47J 27/62

(54) **Garverfahren zum Kochen oder Pochieren in einem Tiegel**
Method for cooking in a pot
Procédé de cuisson dans une marmite

(43) Veröffentlichungstag der Anmeldung: 02.11.2006
(73) Patentinhaber: Rational AG, 86899 Landsberg/Lech (DE); Frima SA, 68271 Wittenheim Cedex (FR)
(72) Erfinder: Podestat, Helen, 79356 Eichstetten (DE); Wiedemann, Peter, 86836, Klosterlechfeld (DE); Funk, Gerd, 86899, Landsberg (DE)
(74) Vertreter: Weber-Bruls, Dorothée

(56) Entgegenhaltungen:
- EP-A- 1 384 951
- DE-U1-9202004 018 71

## Beschreibung

Die vorliegende Erfindung betrifft ein Garverfahren für eine Garvorrichtung mit zumindest einem ersten Garbehälter, wie in Form eines Tiegels oder dergleichen, der zumindest teilweise mit einem fluiden Garmedium, insbesondere umfassend Wasser oder Milch, gefüllt werden kann, damit Gargut im Garmedium gegart, insbesondere gekocht oder pochiert werden kann.

Solche Garverfahren sind im Stand der Technik gut bekannt, wobei hier, lediglich beispielhaft, auf die DE 200 23 460 U1 hinzuweisen ist; in der eine Garvorrichtung offenbart ist, in der das Garen von Gargut in einem flüssigen Garmedium innerhalb eines aufheizbaren Tiegels unter Ausnutzung erfaßter Kerntemperaturwerte des Garguts beschrieben ist.

Aus dem Stand der Technik ist auch eine Garvorrichtung mit einem tiegelartigen ersten Garbehälter bekannt, der mit fluidern Crarmedium teilweise gefüllt ist und in den Gargut innerhalb eines zweiten Garbehälters, beispielsweise in Form eines Garkorbs, zum Garen einführbar ist, siehe insbesondere die DE 102 24 465 B4.

Garvorrichtungen können auch modulartig aufgebaut sein und beispielsweise eine Vielzahl von erste Gärbehälter darstellenden Tiegeln umfassen, wie z. B. in der DE 203 10 602 U1 offenbart.

Die bekannten Garvorrichtungen haben sich grundsätzlich bewährt, und es besteht zur Zeit im wesentlichen eine Nachfrage nach Garverfahren für die bekannten Garvorrichtungen, insbesondere zur Automatisierung des Garens, so daß auch ungelemte Bedienpersonen qualitativ hochwertige Speisen herstellen können. Dies ist vor allem für die Großküche, in der auf engem Raum unter großem Zeitdruck eine große Anzahl von Speisen gleichzeitig sowie kostengünstig herzurichten ist, von großer Bedeutung. Aufgabe der vorliegenden Erfindung ist es daher, das gattungsgemäße Garverfahren derart weiterzuentwickeln, daß es ein zumindest halbautomatisches Kochen oder Pochieren von Gargut reproduzierbar mit hoher Qualität gewährleistet.

Diese Aufgabe wird erfindungsgemäß durch folgende Schritte gelöst:
- Auswählen eines halb- oder vollautomatischen Garens durch eine Bedienperson,
- Auswählen eines Garguts und/oder eines Garprozesses durch eine Bedienperson,
- automatisches Befüllen des ersten Garbehälters mit Garmedium in einer in Abhängigkeit von dem ausgewählten Gargut und/oder dem ausgewählten Garprozeß bestimmten Menge,
- automatisches Aufheizen des Garmediums in dem ersten Garbehälter auf eine in Abhängigkeit von dem ausgewählten Gargut und/oder dem ausgewählten Garprozeß bestimmten Temperatur,
- automatisches Einführen von Gargut in das aufgeheizte Gamedium,
- automatisches Garen des Garguts in dem aufgeheizten Garmedium in Abhängigkeit von dem ausgewählten Gargut und/oder dem ausgewählten Garprozeß, und
- automatisches Entfernen des gegarten Garguts aus dem Garmedium.

Dabei kann vorgesehen sein, daß das Auswählen eines Garguts und/oder eines Garprozesses das Auswählen einer Gargutart, einer Gargutcharge, eines Gargutkalibers, eines Gargutendzustandes und/oder einer Garbetriebsart über eine Anzeige- und Bedieneinrichtung der Garvorrichtung umfaßt.

Bevorzugt ist erfindungsgemäß dabei, daß das Auswählen einer Gargutart das Auswählen von Eiern, Gemüse, Reis, Teigwaren, insbesondere Nudeln, Fleisch, einschließlich Würst, und/oder Fisch, vorzugsweise in einer ersten auf der Anzeige- und Bedieneinrichtung dargebotenen Menüebene, umfaßt, und/oder das Auswählen einer Gargutcharge das Auswählen der Beladung, insbesondere eines zweiten Garbehälters, wie in Form eines Garkorbs oder dergleichen, mit Gargut, vorzugsweise in einer zweiten auf der Anzeige- und Bedieneinrichtung dargebotenen Menüebene, umfaßt, und/oder das Auswählen eines Gargutkalibers das Auswählen einer mittleren Gargutgröße, vorzugsweise in der zweiten auf der Anzeige- und Bedieneinrichtung dargebotenen Menüebene, umfaßt, und/oder das Auswählen eines Gargutendzustandes das Auswählen eines internen Gargutendzustandes, insbesondere bestimmt durch die Garzeit und/oder die Kerntemperatur des Garguts, und/oder eines externen Gargutendzustandes, vorzugsweise in der zweiten auf der Anzeige- und Bedieneinrichtung dargebotenen Menüebene, umfaßt, und/oder das Auswählen einer Garbetriebsart das Auswählen zwischen Kochen oder Pochieren, vorzugsweise in der zweiten auf der Anzeige- und Bedieneinrichtung dargebotenen Menüebene, umfaßt.

Eine erfindungsgemäßes Garverfahren kann auch ein automatisches Auffordern zum Beladen eines relativ zu dem ersten Garbehälter beweglichen Teils der Garvorrichtung mit Gargut über die Anzeige- und Bedieneinrichtung der Garvorrichtung, insbesondere nach Erreichen der bestimmten Temperatur im Garmedium, umfassen.

Erfindungsgemäß kann zudem ein automatisches Auffordern zum Entladen des relativ zu dem ersten Garbehälter beweglichen Teils der Garvorrichtung von Gargut über die Anzeige- und Bedieneinrichtung der Garvorrichtung, insbesondere nach Verstreichen einer in Abhängigkeit von dem ausgewählten Gargut und/oder dem ausgewählten Garprazeß bestimmten Garzeit und/oder nach Erreichen einer in Abhängigkeit von dem ausgewählten Gargut und/oder dem ausgewählten Garprozeß bestimmten Kerntemperatur des Garguts, vorgesehen sein.

Ferner wird mit der Erfindung vorgeschlagen, daß der bewegliche Teil der Garvorrichtung, der vorzugsweise mit einem Deckel des ersten Garbehälters, mit dem der erste Garbehälter zumindest teilweise verschließbar ist, in Wirkverbindung steht, zum zeitweise Einführen von Gargut in das aufgeheizte Garmedium automatisch bewegt wird.

Dabei wiederum ist bevorzugt, daß zumindest ein zweiter Garbehälter, wie in Form eines Garkorbs oder dergleichen, der mit Gargut beladen und mit dem Deckel verbunden werden kann, vorzugsweise über eine Hebe-/Senkvorrichtung, in den ersten Garbehälter hinein- und aus demselben herausbewegt wird.

Mit der Erfindung wird auch ein Garverfahren zum Kochen von Eiern vorgeschlagen, das ein automatisches Auffordern zum Abschrecken der Eier, vorzugsweise mittels einer Handbrause der Garvorrichtung und/oder über die Anzeige- und Bedieneinrichtung der Garvorrichtung, zwischen dem automatischen Entfernen der gegarten Eier aus dem Garmedium und der automatischen Aufforderung zum Entladen der Eier umfaßt.

Erfindungsgemäß kann weiterhin vorgesehen sein, daß jede automatische Aufforderung in zumindest einer dritten Menüebene von der Anzeige- und Bedienvorrichtung dargeboten wird.

Ferner kann vorgesehen sein, daß die Anzeige- und Bedieneinrichtung zumindest ein Touchscreen, vorzugsweise eine Vielzahl von Touchscreens, umfaßt, das bzw. die mit einer Steuer- oder Regeleinrichtung der Garvorrichtung, insbesondere zum Darbieten einer Menüebene in Abhängigkeit von zumindest einem seitens einer Bedienperson durchgeführten Auswahlschritt, zum Darbieten zumindest einer Aufforderung und/oder zum Darbieten zumindest einer Information über den Stand des Garverfahrens sowie zum. Empfangen zumindest einem Befehl in zumindest einem Auswahlschritt zum Führen des Garverfahrens, wechselwirkt bzw. wechselwirken.

Erfindungsgemäß kann vorgesehen sein, daß das Garverfahren, vorzugsweise aus ?? es, vorzugsweise nach dem automatischen Entfernen des gegarten Garguts, aus dem Garmedium, gespeichert und/oder programmiert werden kann, insbesondere über die Anzeige- und Bedieneinrichtung.

Auch kann das Garverfahren abgebrochen und/oder über einen Hilfstext erläutert werden, insbesondere über die Anzeige- und Bedieneinrichtung.

Der Erfindung liegt somit die überraschende Erkenntnis zugrunde, daß ein Garverfahren, bei dem Gargut in einem fluiden Garmedium, insbesondere in Wasser oder Milch, gekocht oder pochiert werden soll, dadurch weiter automatisiert werden kann, daß nicht nur eine Bedienperson in Kommunikation mit einer das Garverfahren durchführenden Garvorrichtung tritt, sondern die Garvorrichtung zudem automatisch Garschritte durchführt. Dabei kann die Garvorrichtung automatisch Garmedium in einer benötigten Menge in einen ersten Garbehälter emmilen, besagtes Garmedium automatisch auf eine benötigte Temperatur aufheizen, Gargut automatisch in das aufgeheizte Garmedium einführen, automatisch ein vollständiges Garen des Garguts durchführen und schließlich das gegarte Gargut automatisch wieder aus dem Garmedium entfernen, um ein Übergaren zu vermeiden.

Weitere Merkmale und Vorteile der Erfindung ergeben sich aus der nachfolgenden Besehreibung, in der ein Ausführungsbeispiel der Erfindung anhand von schematischen Zeichnungen beispielhaft erläutert ist. Dabei zeigt.
- Fig. 1: eine Anzeige- und Bedieneinrichtung einer Garvorrichtung zum Durchführen eines erfindungsgemäßen Garverfahrens in einer ersten Menüebene;
- Fig. 2: die Anzeige- und Bedieneinrichtung von Fig. 1 in einer zweiten Menüebene; und
- Fig. 3 - 10: die Anzeige- und Bedieneinrichtung von Fig. 1 in einer dritten Menüebene zu unterschiedlichen, aufeinanderfolgenden Zeitpunkten.

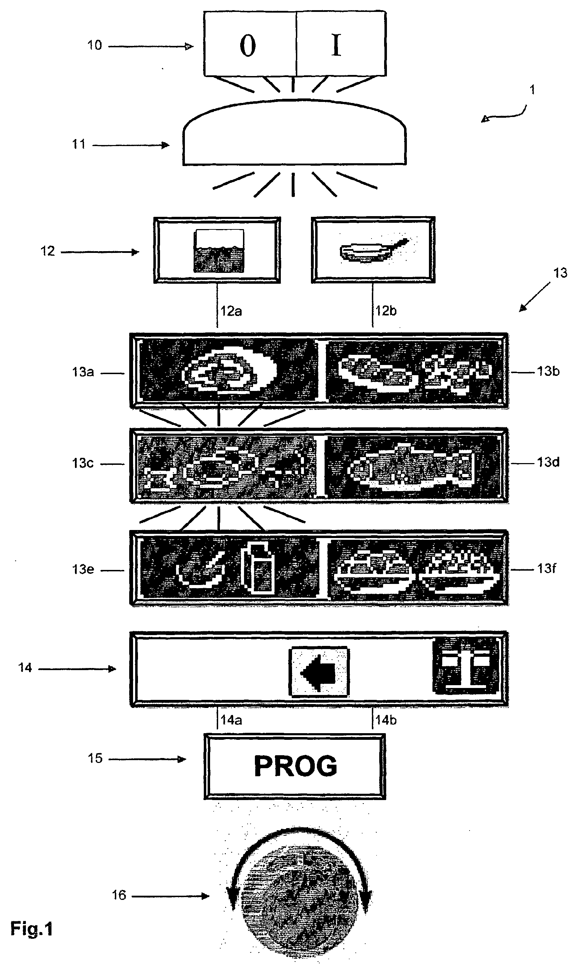

Wie Fig. 1 zu entnehmen ist, umfaßt eine Garvorrichtung, wie sie beispielsweise aus der DE 203 10 602 U1 bekannt ist, zusätzlich zu beispielsweise zwei tiegelartigen ersten Garbehältern (nicht gezeigt), die beidseitig an einem säulenartigen Träger (nicht gezeigt) angebracht sind, eine Anzeige- und Bedieneinrichtung 1 auf dem Träger. Die Anzeige- und Bedieneinrichtung 1 umfaßt dabei einen Ein-/Ausschalter 10, ein Schaltelement 11 zum Aktivieren von halb- oder vollautomatischen Garverfahren, ein Garbetriebsartauswahlelement 12, ein Gargutauswahlfeld 13, ein Kommunikationselement 14, ein Programmierelement 15 und ein Auswahl- und Bestätigungselement 16. Das Garbetriebsartauswahlelement 12 umfaßt seinerseits zwei Schaltelemente 12a, 12b, wobei die Betriebsart "Kochen" oder "Pochieren" durch Betätigen des ersten Schaltelements 12a, die Betriebsart "Braten" durch Betätigen des zweiten Schaltelements 12b und die Betriebsart "Fritieren" durch das Betätigen beider Schaltelemente 12a und 12b aktiviert werden. Das Gargutauswahlfeld 13 umfaßt seinerseits sechs Gargutauswahlelemente 13a bis 13f. Das Kommunikationselement 14 umfaßt schließlich ein Informationselement 14a und ein Tiegelauswahlelement 14b.

In Fig. 1 ist durch Pfeile im Bereich des Schaltelements 11 angedeutet, daß ein halb- oder vollautomatisches Garverfahren von einer Bedienperson ausgewählt worden ist, und zwar zum Garen von Eiern als Gargut, wie durch Pfeile im Bereich des Gargutauswahlelements 13c angedeutet. Zudem ist dem Tiegelauswahlelement 14b zu entnehmen, daß die Anzeige- und Bedieneinrichtung 1 dem links von dem säulenartigen Träger angeordneten Tiegel zugeordnet ist, wobei ein Betätigen des Tiegelauswahlelements 14b die Anzeige- und Bedieneinrichtung 1 für den rechts von dem säulenartigen Träger angeordneten Tiegel darstellen würde.

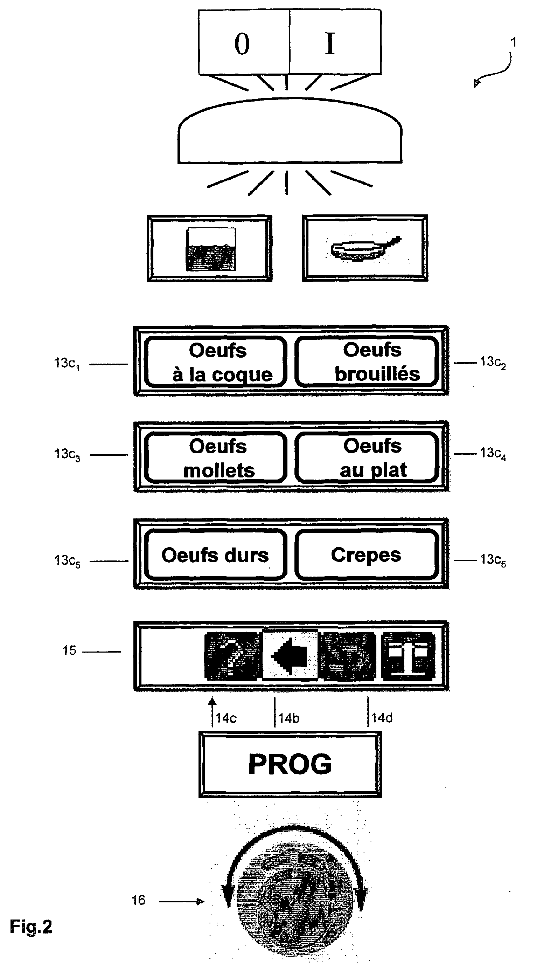

In der in Fig. 1 dargestellten ersten Menüebene der Anzeige- und Bedieneinrichtung 1 ist somit aus der Vielzahl von in der Garvorrichtung abgelegten Garverfahren ein zumindest halbautomatisches Garen von Eier ausgewählt worden. Für einen Wechsel der Menüebene für diese Auswahl kann entweder eine gewisse Zeit abgewartet oder aber das Auswahl- und Bestätigungselement 16 betätigt werden. Dies führt zum Anzeigen einer zweiten Menüebene gemäß Fig. 2.

Wie Fig. 2 zu entnehmen ist, besteht in der zweiten Menüebene die Möglichkeit der Auswahl eines Garprozesses für Eier über Gargutauswahlelemente 13c₁ bis 13c₅. Beispielsweise kann in der zweiten Menüebene das Gargutauswahlelement 13c₁ betätigt werden, also ein derartiges Garen von Eiern ausgewählt werden, daß die fertiggestellten Eier im Inneren noch sehr weich sind. Falls weitere Informationen zu der zweiten Menüebene gewünscht sind, kann ein Hilfstextaufrufelement 14c im Bereich des Kommunkationselements 14 betätigt werden. Das Garverfahren kann selbstverständlich auch abgebrochen werden, indem ein Abbruchelement 14d im Bereich des Kommunikationselements 14 betätigt wird. Ist jedoch eine Auswahl getroffen worden, so kann in eine dritte Menüebene durch Betätigen des Auswahl- und Bestätigungselements 16 gewechselt werden.

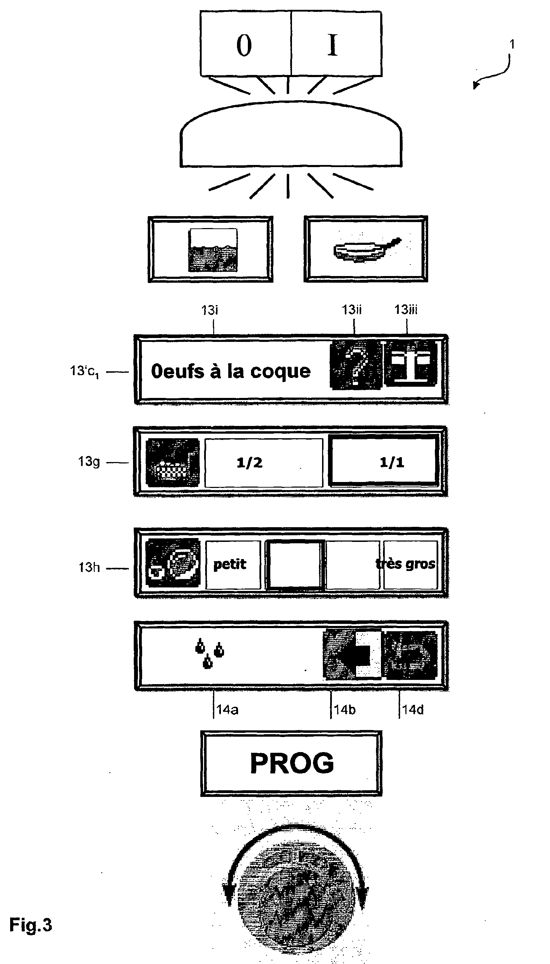

Fig. 3 zeigt diese dritte Menüebene der Anzeig- und Bedieneinrichtung 1, bei der im Bereich des Gargutauswahlfeldes 13 nunmehr die Auswahl einer Gargutcharge über ein Gargutchargenauswahlelement 13g und die Auswahl eines Gargutkalibers über ein Gargutkaliberauswahlelement 13h möglich ist. In Fig. 3 ist dabei beispielhaft eine volle Beladung eines Garkorbs als Gargutcharge und relativ kleine Eier als Gargutkaliber ausgewählt worden, es sei denn, das Abbruchelement 14d wurde betätigt. Zudem ist anzumerken, daß das Gargutauswahlelement 13'c₁ nunmehr in drei Bereiche aufgeteilt ist, umfassend eine Gargutanzeige 13i, ein Hilfstextaufrufelement 13ii und eine Garvorrichtungsanzeige 13iii.

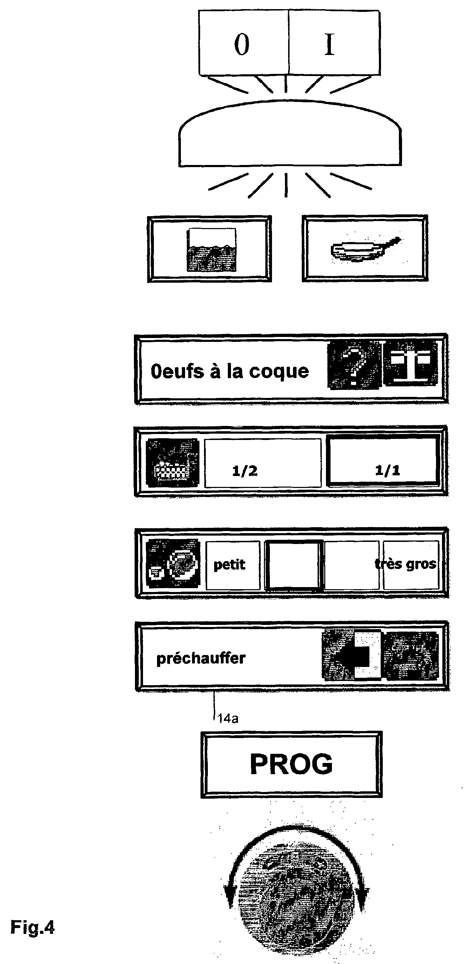

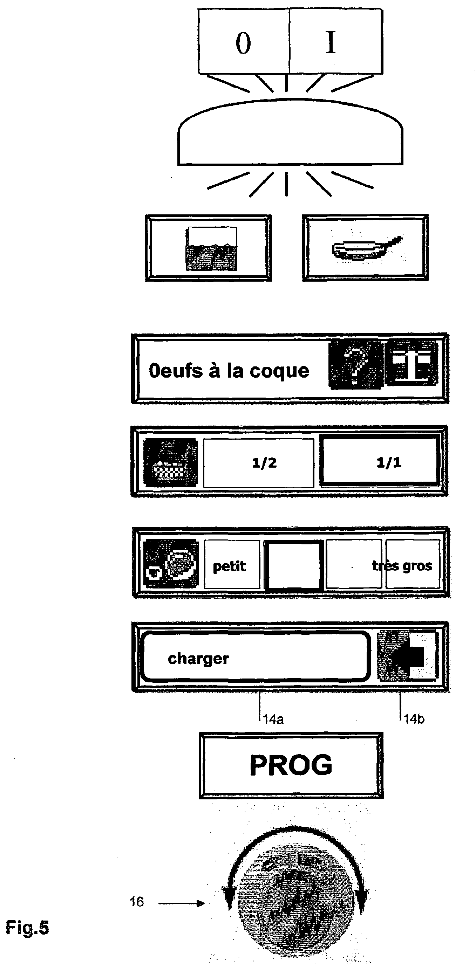

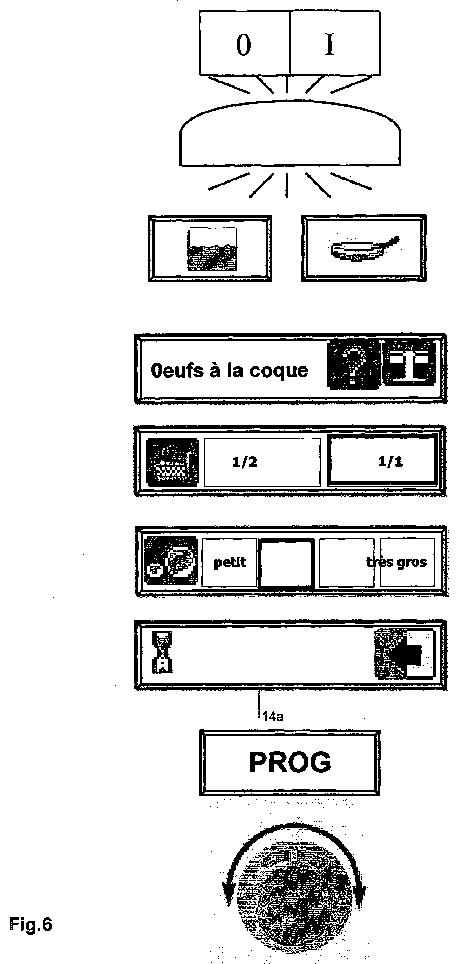

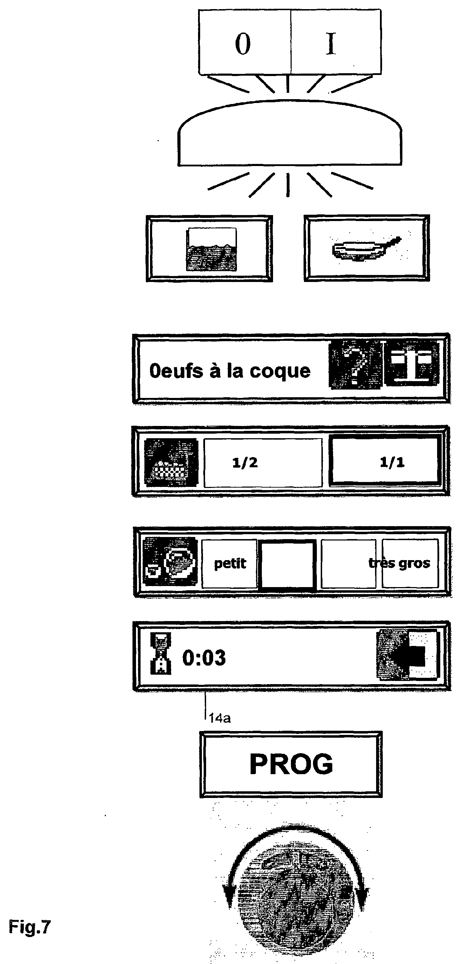

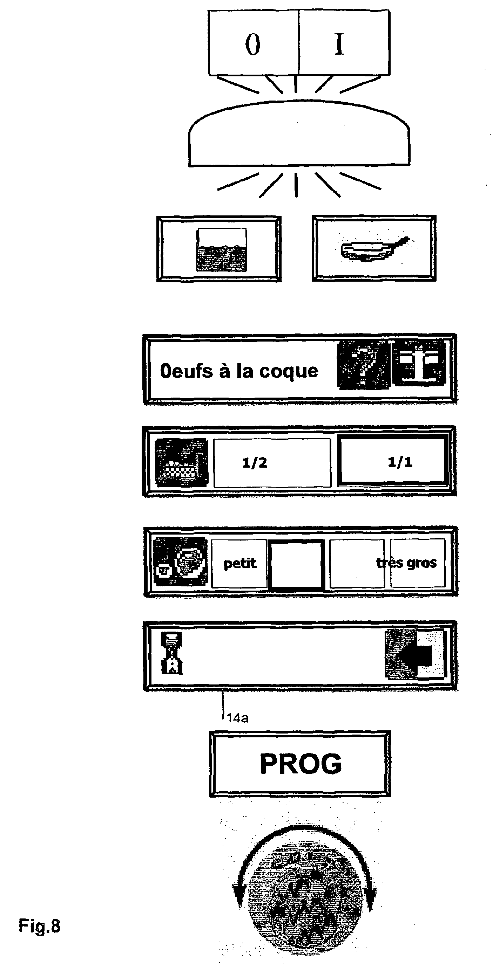

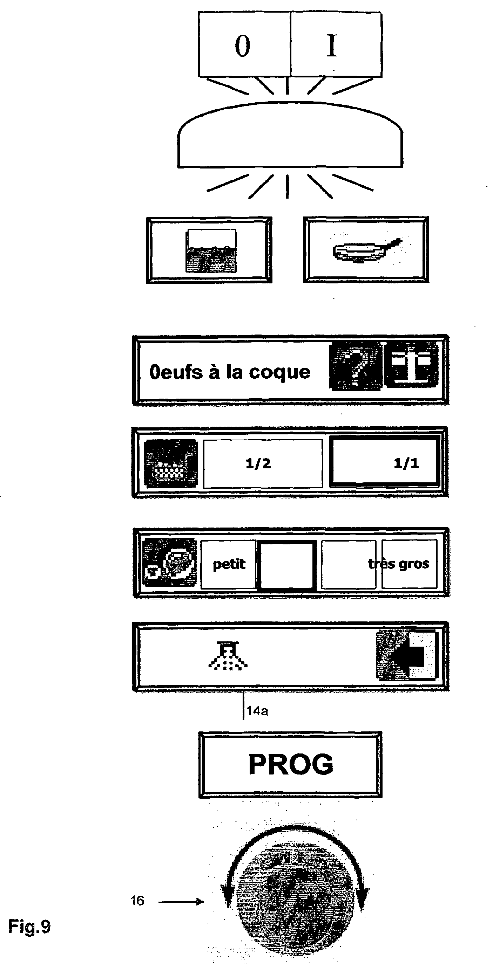

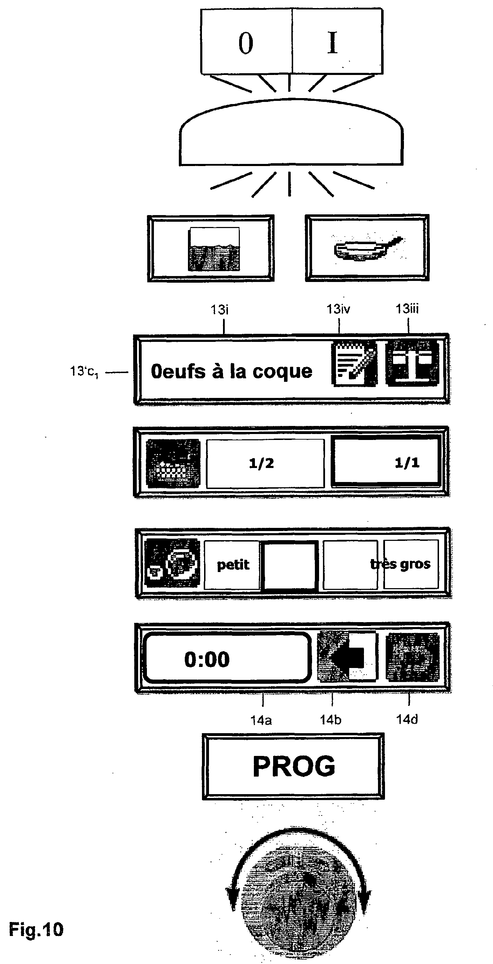

Unmittelbar nach Bestätigung der mit Bezug auf Fig. 3 erläuterten, getätigten Auswahl beginnt das Garverfahren automatisch abzulaufen. Dabei wird zuerst Wasser in den linken Tiegel eingefüllt, und zwar in der für eine volle Beladung eines Garkorbs mit relativ kleinen Eier, die ganz weich gekocht werden sollen, notwendigen Menge, wie im. Bereich des Informationselements 14a durch Tropfen angedeutet. Fig. 4 läßt sich der nächste Garschritt entnehmen, nämlich das Aufheizen des Wassers im linken Tiegel, siehe den Informationstext im Bereich des Informationselements 14a. Nach Erreichen einer Temperatur des Wassers, die zum Welchkochen von relativ kleinen Eier in einem Garkorb, der voll beladen ist, ausreicht, erhält eine Bedienperson die Aufforderung zum Beladen des Garkorbs mit besagten Eiern, wie dem Informationselement 14a in Fig. 5 zu entnehmen ist. Sobald seitens einer Bedienperson über das Auswahl- und Bestätigungselement 16 bestätigt worden ist, daß der Ladevorgang abgeschlossen ist, fährt das Garverfahren automatisch mit dem Senken des Garkorbs samt Eier in das kochende Wasser im Tiegel fort, wie anhand der Eieruhr im Informationselement 14a in Fig. 6 dargestellt. Anschließend wird im Bereich des Informationselements 14a die aktuelle Garzeit angezeigt, beispielsweise drei Sekunden in Fig. 7. Nach Beendigung der Garzeit, die zum Weichgaren von relativ kleinen Eiern, mit denen ein Garkorb völlig beladen ist, ausreicht, wird der Garkorb automatisch aus dem kochenden Wasser entfernt, wie durch die Eieruhr im Bereich des Informationselements 14a in Fig. 8 angedeutet. Im Anschluß erhält eine Bedienperson die Aufforderung über das Informationselement 14a, die fertig gegarten Eier abzuschrecken, und zwar durch Besprühen mittels einer Handbrause, siehe Fig. 9. Sobald eine Bedienperson der Aufforderung Folge geleistet ist, kann sie dies über das Auswahl- und Bestätigungselement 16 der Garvorrichtung mitteilen. Sodann erscheint, noch stets in der dritten Menüebene, auf der Anzeige- und Bedieneinrichtung 1 im Bereich des Gargutauswahlelements 13'c₁ anstelle des Hilfstextaufrufelements 13ii ein Garverfahrenspeicherelement 13iv, nach dessen Betätigen das soeben mit Bezug auf die Fig. 1 bis 10 beschriebene Garverfahren speicherbar ist, beispielsweise unter dem Programmnamen "Eier 1", um ein späteres Wiederholen dieses Garverfahrens zu erleichtern.

Das mit Bezug auf das Kochen von Eiern beschriebene erfindungsgemäße Garverfahren läßt sich selbstverständlich analog für das Kochen von beispielsweise Reis in Wasser oder Milch, das Kochen von Teigwaren, insbesondere Nudel in Wasser, das Pochieren von Fleisch in Brühe oder Wasser oder Pochieren von Fisch in einem Sud oder Wasser realisieren. Dabei entfällt hier der Schritt des Abschreckens. Anstelle der Beladung eines Garkorbs, der an einem nicht gezeigten Deckel, zum zumindest teilweise Verschließen des verwendeten Gartiegels vorgesehen ist, kann Gargut auch direkt an den Deckel angebracht werden, insbesondere im Fall großer Fleisch- oder Fischstücke.

Die in der vorstehenden Beschreibung, in den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Anzeige- und Bedieneinrichtung
- 10: Ein-/Ausschalter
- 11: Schaltelement zum Aktivieren von halb- oder vollautomatischen Garverfahren
- 12: Garbetriebsartauswahlelement
- 12a: Schaltelement zum Aktivieren der Betriebsart "Kochen" oder "Pochieren"
- 12b: Schaltelement zum Aktivieren der Betriebsart "Braten"
- 12a + 12b: Schaltelement zum Aktivieren der Betriebsart "Fritieren"
- 13: Gargutauswahlfeld
- 13a - 13f, 13c₁ - 13c₅: Gargutauswahlelement
- 13g: Gargutchargenauswahlelement
- 13h: Gargutkaliberauswahlelement
- 13i: Gargutanzeige
- 13ii: Hilfstextaufrufelement
- 13iii: Garvorrichtungsanzeige
- 13iv: Garverfahrenspeicherelement
- 14: Kommunikationselement
- 14a: Informationselement
- 14b: Tiegelauswahlelement
- 14c: Hilfstextaufrufelement
- 14d: Abbruchelement
- 14e: Garzeitanzeige
- 15: Programmierelement
- 16: Auswahl- und Bestätigungselement

## Patentansprüche

1. Garverfahren für eine Garvorrichtung mit zumindest einem ersten Garbehälter, wie in Form eines Tiegels oder dergleichen, der zumindest teilweise mit einem fluiden Garmedium, insbesondere umfassend Wasser oder Milch, gefüllt werden kann, damit Gargut im Garmedium gegart, insbesondere gekocht oder pochiert, werden kann, **gekennzeichnet durch** folgende Schritte:
- Auswählen eines halb- oder vollautomatischen Garens **durch** eine Bedienperson,
- Auswählen eines Garguts und/oder eines Garprozesses **durch** eine Bedienperson,
- automatisches Befüllen des ersten Garbehälters mit Garmedium in einer in Abhängigkeit von dem ausgewählten Gargut und/oder dem ausgewählten Garprozeß bestimmten Menge,
- automatisches Aufheizen des Garmediums in dem ersten Garbehälter auf eine in Abhängigkeit von dem ausgewählten Gargut und/oder dem ausgewählten Garprozeß bestimmten Temperatur,
- automatisches Einführen von Gargut in das aufgeheizte Garmedium,
- automatisches Einführen von Gargut in das aufgeheizte Garmedium,
- automatisches Garen des Garguts in dem aufgeheizten Garmedium in Abhängigkeit von dem ausgewählten Gargut und/oder dem ausgewählten Garprozeß, und
- automatisches Entfernen des gegarten Garguts aus dem Garmedium.

2. Garverfahren nach Anspruch 1, **dadurch gekennzeichnet, daß**
das Auswählen eines Garguts und/oder eines Garprozesses das Auswählen einer Gargutart, einer Gargutcharge, eines Gargutkalibers, eines Gargutendzlustandes und/oder einer Garbetriebsart über eine Anzeige- und Bedieneinrichtung der Garvorrichtung umfaßt.

3. Garverfahren nach Anspruch 2, **dadurch gekennzeichnet, daß**
das Auswählen einer Gargutart das Auswählen von Eiern, Gemüse, Reis, Teigwaren, insbesondere Nudeln, Fleisch einschließlich Wurst, und/oder Fisch, vorzugsweise in einer ersten auf der Anzeige und Bedieneinrichtung dargebotenen Menüebene, umfaßt, und/oder
das Auswählen einer Gargutcharge das Auswählen der Beladung, insbesondere eines zweiten Garbehälters, wie in Form eines Garkorbs oder dergleichen, mit Gargut, vorzugsweise in einer zweiten auf der Anzeige- und Bedieneinrichtung dargebotenen Menüebene, umfaßt, und/oder
das Auswählen eines Gargutkalibers das Auswählen einer mittleren Gargutgröße, vorzugsweise in der zweiten auf der Anzeige- und Bedieneinrichtung dargebotenen Menüebene, umfaßt, und/oder
das Auswählen eines Gargutendzustandes das Auswählen eines internen Gargutendzustandes, insbesondere bestimmt durch die Garzeit und/oder die Kerntemperatur des Garguts, und/oder eines externen Gargutendzustandes, vorzugsweise in der zweiten auf der Anzeige- und Bedieneinrichtung dargebotenen Menüebene, umfaßt, und/oder das Auswählen einer Garbetriebsart das Auswählen zwischen Kochen oder Pochieren, vorzugsweise in der zweiten auf der Anzeige- und Bedieneinrichtung dargebotenen Menüebene, umfaßt.

4. Garverfahren nach einem der vorangehenden Ansprüche, **gekennzeichnet durch** folgenden Schritt:
automatisches Auffordern zum Beladen eines relativ zu dem ersten Garbehälter beweglichen Teils der Garvorrichtung mit Gargut über die Anzeige-und Bedieneinrichtung der Garvorrichtung, insbesondere nach Erreichen der bestimmten Temperatur im Garmedium.

5. Garverfahren nach Anspruch 4, **gekennzeichnet durch** folgenden Schritt:
automatisches Auffordern zum Entladen des relativ zu dem ersten Garbehälter beweglichen Teils der Garvorrichtung von Gargut über die Anzeige- und Bedieneinrichtung der Garvorrichtung insbesondere nach Verstreichen einer in Abhängigkeit von dem ausgewählten Gargut und/oder dem ausgewählten Garprozeß bestimmten Garzeit und/oder nach Erreichen einer in Abhängigkeit von dem ausgewählten Gargut und/oder dem ausgewählten Garprozeß bestimmten Kerntemperatur des Garguts.

6. Garverfahren nach Anspruch 4 oder 5, **dadurch gekennzeichnet, daß**
der bewegliche Teil der Garvorrichtung, der vorzugsweise mit einem Deckel des ersten Garbehälters, mit dem der erste Garbehälter zumindest teilweise verschließbar ist, in Wirkverbindung steht, zum zeitweise Einführen von Gargut in das aufgeheizte Garmedium automatisch bewegt wird.

7. Garverfahren nach Anspruch 6, **dadurch gekennzeichnet, daß**
zumindest ein zweiter Garbehälter, wie in Form eines Garkorbs oder dergleichen, der mit Gargut beladen und mit dem Deckel verbunden werden kann, vorzugsweise über eine Hebe-/Senkvorrichtung, in den ersten Garbehälter hinein- und aus demselben herausbewegt wird.

8. Garverfahren nach einem der Ansprüche 5 bis 7, **gekennzeichnet durch** folgenden Schritt in dem Fall, in dem Eier als Gargutart ausgewählt sind:
automatisches Auffordern zum Abschrecken der Eier, vorzugsweise mittels einer Handbrause der Garvorrichtung und/oder über die Anzeige-und Bedieneinrichtung der Garvorrichtung, zwischen dem automatischen Entfernen der gegarten Eier aus dem Garmedium und der automatischen Aufforderung zum Entladen der Eier.

9. Garverfahren nach einem der Ansprüche 4 bis 8, **dadurch gekennzeichnet, daß**
jede automatische Aufforderung in zumindest einer dritten Menüebene von der Anzeige und Bedienvorrichtung dargeboten wird.

10. Garverfahren nach einem der Ansprüche 2 bis 9, **dadurch gekennzeichnet, daß**
die Anzeige- und Bedieneinrichtung zumindest ein Touchscreen, vorzugsweise eine Vielzahl von Touchscreens, umfaßt, das bzw. die mit einer Steuer- oder Regeleinrichtung der Garvorrichtung, insbesondere zum Darbieten einer Menüebene in Abhängigkeit von zumindest einem seitens einer Bedienperson durchgeführten Auswahlschritt, zum Darbieten zumindest einer Aufforderung und/oder zum Darbieten zumindest einer Information über den Stand des Garverfahrens sowie zum Empfangen von zumindest einem Befehl in zumindest einem Auswahlschritt zum Führen des Garverfahrens, wechselwirkt bzw. wechselwirken.

11. Garverfahren nach einem der vorangehenden Ansprüche, **dadurch gekennzeichnet, daß** es, vorzugsweise nach dem automatischen Entfernen des gegarten Garguts aus dem Garmedium, gespeichert und/oder programmiert werden kann, insbesondere über die Anzeige- und Bedieneinrichtung.

12. Garverfahren nach einem der vorangehenden Ansprüche, **dadurch gekennzeichnet, daß** es abgebrochen und/oder über einen Hilfstext erläutert werden kann, insbesondere über die Anzeige- und Bedieneinrichtung.

## Claims

1. Cooking process for a cooking appliance having at least one first cooking container, for example in the form of a pot or the like, which can be filled at least partially with a fluid cooking medium, in particular comprising water or milk, in order to make it possible to cook, in particular boil or poach, food in the cooking medium, **characterized by** the following steps:
- an operator selecting semi-automatic or fully automatic cooking,
- an operator selecting a food and/or a cooking process,
- automatic filling of the first cooking container with cooking medium in a quantity which is determined in dependence on the food selected and/or the cooking process selected,
- automatic heating up of the cooking medium in the first cooking container to a temperature which is determined in dependence on the food selected and/or the cooking process selected,
- automatic introduction of food into the heated-up cooking medium,
- automatic cooking of the food in the heated-up cooking medium in dependence on the food selected and/or the cooking process selected, and
- automatic removal of the cooked food from the cooking medium.

2. Cooking process according to Claim 1, **characterized in that**
selecting a food and/or a cooking process comprises selecting a food type, a food load, a food calibre, a food end state and/or a cooking mode via a display and operating device of the cooking appliance.

3. Cooking process according to Claim 2, **characterized in that**
selecting a food type comprises selecting eggs, vegetables, rice, pasta or noodles, meat, including sausage, and/or fish, preferably on a first menu level displayed on the display and operating device, and/or
selecting a food load comprises selecting the degree to which, in particular, a second cooking container, for example in the form of a cooking basket or the like, is loaded with food, preferably on a second menu level displayed on the display and operating device, and/or
selecting a food calibre comprises selecting an average food size, preferably on the second menu level displayed on the display and operating device, and/or
selecting a food end state comprises selecting an internal food end state, in particular determined by the cooking time and/or the core temperature of the food, and/or an external food end state, preferably on the second menu level displayed on the display and operating device, and/or
selecting a cooking mode comprises selecting between boiling or poaching, preferably on the second menu level displayed on the display and operating device.

4. Cooking process according to one of the preceding claims, **characterized by** the following step:
automatically requesting, via the display and operating device of the cooking appliance, that part of the cooking appliance which can be moved relative to the first cooking container is loaded with food, in particular once the specific temperature in the cooking medium has been reached.

5. Cooking process according to Claim 4, **characterized by** the following step:
automatically requesting, via the display and operating device of the cooking appliance, that food is unloaded from the part of the cooking appliance which can be moved relative to the first cooking container, in particular once a cooking time which is determined in dependence on the food selected and/or the cooking process selected has elapsed and/or once a food core temperature which is determined in dependence on the food selected and/or the cooking process selected has been reached.

6. Cooking process according to Claim 4 or 5, **characterized in that** the movable part of the cooking appliance, this part preferably being in operative connection with a cover of the first cooking container, the latter being at least partially closable by the cover, is moved automatically into the heated-up cooking medium in order for food to be introduced at certain times.

7. Cooking process according to Claim 6, **characterized in that** at least one second cooking container, for example in the form of a cooking basket or the like, which can be loaded with food and connected to the cover, is moved into the first cooking container, and out of the same, preferably via a lifting/lowering arrangement.

8. Cooking process according to one of Claims 5 to 7, **characterized by** the following step, in the case where eggs are selected as the food type:
automatically requesting, via the display and operating device of the cooking appliance, that the eggs are rinsed in cold water, preferably using a hand spray of the cooking appliance, between the operations of automatically removing the cooked eggs from the cooking medium and automatically requesting unloading of the eggs.

9. Cooking process according to one of Claims 4 to 8, **characterized in that** each automatic request is displayed on at least one third menu level of the display and operating device.

10. Cooking process according to one of Claims 2 to 9, **characterized in that** the display and operating device comprises at least one touch screen, preferably a multiplicity of touch screens, which interacts, or interact, with a control or regulating device of the cooking appliance, in particular for displaying a menu level in dependence on at least one selection step implemented by an operator, for displaying at least one request and/or for displaying at least one piece of information regarding the current point reached in the cooking process, and for receiving at least one command in at least one selection step for conducting the cooking process.

11. Cooking process according to one of the preceding claims, **characterized in that**, preferably following the automatic removal of the cooked food from the cooking medium, the cooking process can be stored and/or programmed, in particular via the display and operating device.

12. Cooking process according to one of the preceding claims, **characterized in that** it can be broken off and/or explained via a help text, in particular via the display and operating device.

## Revendications

1. Procédé de cuisson pour un dispositif de cuisson, à l'aide d'au moins un premier récipient de cuisson, sous la forme d'une casserole ou similaire, qui peut être rempli au moins en partie avec un milieu de cuisson fluide, y compris en particulier de l'eau ou du lait, avec lequel un produit à cuire peut être cuit dans le milieu de cuisson, en particulier bouilli ou poché, **caractérisé en ce qu'**il comporte les étapes consistant :
- sélectionner, par un opérateur humain, une cuisson semi-automatique ou entièrement automatique,
- sélectionner, par un opérateur humain, un produit à cuire et/ou un processus de cuisson,
- remplir automatiquement le premier récipient de cuisson avec un milieu de cuisson, en une quantité déterminée en fonction du produit à cuire sélectionné et/ou du processus de cuisson sélectionné,
- chauffer automatiquement le milieu de cuisson dans le premier récipient de cuisson à une température déterminée en fonction du produit à cuire sélectionné et/ou du processus de cuisson sélectionné,
- introduire automatiquement un produit à cuire dans le milieu de cuisson chauffé,
- cuire automatiquement le produit à cuire dans le milieu de cuisson chauffé en fonction du produit à cuire sélectionné et/ou du processus de cuisson sélectionné, et
- retirer automatiquement le produit à cuire cuit du milieu de cuisson.

2. Procédé de cuisson selon la revendication 1, **caractérisé en ce que**
la sélection d'un produit à cuire et/ou d'un processus de cuisson inclut la sélection d'un type de produit à cuire, d'une charge de produit à cuire, d'un calibre de produit à cuire, d'un état final de produit à cuire et/ou d'un mode de cuisson par un dispositif d'affichage et de commande du dispositif de cuisson.

3. Procédé de cuisson selon la revendication 2, **caractérisé en ce que**
la sélection d'un type de produit à cuire inclut la sélection d'oeufs, de légumes, de riz, de pâtes alimentaires, en particulier de nouilles, de viande, y compris de saucisses, et/ou de poisson, de préférence dans un premier panneau de menu présenté sur le dispositif d'affichage et de commande, et/ou
la sélection d'une charge de produit à cuire inclut la sélection du chargement, en particulier d'un deuxième récipient de cuisson, sous la forme d'un panier de cuisson ou similaire, avec un produit à cuire, de préférence dans un deuxième panneau de menu présenté sur le dispositif d'affichage et de commande, et/ou
la sélection d'un calibre de produit à cuire inclut la sélection d'une taille moyenne de produit à cuire, de préférence dans le deuxième panneau de menu présenté sur le dispositif d'affichage et de commande, et/ou
la sélection d'un état final du produit à cuire inclut la sélection d'un état final interne du produit à cuire, déterminé en particulier par le temps et/ou la température centrale du produit à cuire, et/ou d'un état final externe du produit à cuire, de préférence dans le deuxième panneau de menu présenté sur le dispositif d'affichage et de commande, et/ou,
la sélection d'un mode de cuisson inclut la sélection entre cuire et pocher, de préférence dans le deuxième panneau de menu présenté sur le dispositif d'affichage et de commande.

4. Procédé de cuisson selon l'une quelconque des revendications précédentes, **caractérisé par** l'étape suivante consistant à :
requérir automatiquement le chargement d'une partie du dispositif de cuisson avec le produit à cuire, mobile par rapport au premier récipient de cuisson, sur le dispositif d'affichage et de commande du dispositif de cuisson, en particulier après obtention de la température déterminée dans le milieu de cuisson.

5. Procédé de cuisson selon la revendication 4, **caractérisé par** l'étape suivante consistant à :
requérir automatiquement le déchargement de la partie du dispositif de cuisson du produit à cuire mobile par rapport au premier récipient de cuisson, sur le dispositif d'affichage et de commande du dispositif de cuisson, en particulier après écoulement d'un temps de cuisson déterminé en fonction du produit à cuire sélectionné et/ou du processus de cuisson sélectionné et/ou après obtention d'une température centrale du produit à cuire déterminée en fonction du produit à cuire sélectionné et/ou du processus de cuisson sélectionné.

6. Procédé de cuisson selon la revendication 4 ou 5, **caractérisé en ce que**
la partie mobile du dispositif de cuisson, qui est en liaison active de préférence avec un couvercle du premier récipient de cuisson, avec lequel le premier récipient de cuisson peut être au moins en partie verrouillé, est déplacée automatiquement pour l'introduction temporaire de produit à cuire dans le milieu de cuisson chauffé.

7. Procédé de cuisson selon la revendication 6, **caractérisé en ce que**
au moins un deuxième récipient de cuisson, sous la forme d'un panier de cuisson ou similaire, qui peut être chargé avec le produit de cuisson et relié au couvercle, est déplacé dans le premier récipient de cuisson, et hors de celui-ci, de préférence par un dispositif de levage/d'abaissement.

8. Procédé de cuisson selon l'une quelconque des revendications 5 à 7, **caractérisé par** l'étape suivante, dans le cas où des oeufs sont sélectionnés en tant que type de produit à cuire, consistant à :
requérir automatiquement le passage des oeufs sous l'eau froide, de préférence par l'intermédiaire d'une douchette manuelle du dispositif de cuisson et/ou par le dispositif d'affichage et de commande du dispositif de cuisson, entre le retrait automatique des oeufs cuits du milieu de cuisson et la requête automatique de déchargement des oeufs.

9. Procédé de cuisson selon l'une quelconque des revendications 4 à 8, **caractérisé en ce que** chaque requête automatique est présentée dans au moins un troisième panneau de menu du dispositif d'affichage et de commande.

10. Procédé de cuisson selon l'une quelconque des revendications 2 à 9, **caractérisé en ce que** le dispositif d'affichage et de commande inclut au moins un écran tactile, de préférence une pluralité d'écrans tactiles, qui interagit et/ou interagissent avec un dispositif de commande ou de régulation du dispositif de cuisson, en particulier pour proposer un panneau de menu en fonction d'au moins une étape de sélection effectuée par un opérateur humain, pour proposer au moins une requête et/ou pour proposer au moins une information sur l'état du procédé de cuisson, ainsi que pour recevoir au moins un ordre dans au moins une étape de sélection, afin de commander le procédé de cuisson.

11. Procédé de cuisson selon l'une quelconque des revendications précédentes, **caractérisé en ce qu'**il peut être mémorisé et/ou programmé, de préférence après le retrait automatique du produit à cuire cuit à partir du milieu de cuisson, en particulier par le dispositif d'affichage et de commande,

12. Procédé de cuisson selon l'une quelconque des revendications précédentes, **caractérisé en ce qu'**il peut être interrompu et/ou expliqué par un texte d'aide, en particulier par le dispositif d'affichage et de commande.
